# EUROPÄISCHE PATENTSCHRIFT

(11) **EP 3 283 323 B1**
(45) Veröffentlichungstag und Bekanntmachung des Hinweises auf die Patenterteilung: **16.11.2022**
(21) Anmeldenummer: 16713813.0
(22) Anmeldetag: 24.03.2016
(51) Int. Cl.: B60N 2/02, B62D 1/10, B62D 1/183

(54) **VERFAHREN ZUM BETREIBEN EINES FAHRZEUGS UND FAHRZEUG**
METHOD FOR OPERATING A VEHICLE, AND VEHICLE
PROCÉDÉ DE FONCTIONNEMENT D'UN VÉHICULE ET VÉHICULE

(30) Priorität: 13.04.2015 DE 102015206501
(43) Veröffentlichungstag der Anmeldung: 21.02.2018
(73) Patentinhaber: Bayerische Motoren Werke Aktiengesellschaft, 80809 München (DE)
(72) Erfinder: WOLF, Anton, 81675 München (DE)
(86) Internationale Anmeldenummer: PCT/EP2016/056513
(87) Internationale Veröffentlichungsnummer: WO 2016/165924

(56) Entgegenhaltungen:
- EP-A2- 2 840 000
- DE-A1-102006 032 769
- DE-A1-102013 110 865

## Beschreibung

Die vorliegende Erfindung betrifft ein Fahrzeug mit einem Cockpit umfassend einen Fahrersitz und mindestens ein fahrrelevantes Cockpitelement zur funktionalen Nutzung durch einen Fahrer des Fahrzeugs, wobei das Fahrzeug in einem manuellen Fahrmodus und in einem zumindest teilweise automatischen Fahrmodus betreibbar ist. Die Erfindung betrifft weiterhin ein Verfahren zum Betreiben eines Fahrzeugs mit einem Cockpit umfassend einen Fahrersitz und mindestens ein fahrrelevantes Cockpitelement zur funktionalen Nutzung durch einen Fahrer des Fahrzeugs, wobei das Fahrzeug in einem manuellen Fahrmodus und in einem zumindest teilweise automatischen Fahrmodus betreibbar ist.

Ein solches Fahrzeug kann insbesondere ein Kraftfahrzeug sein. Die Erfindung ist jedoch nicht auf Kraftfahrzeuge beschränkt, sondern kann auch in anderen Fahrzeugen wie z.B. Schienenfahrzeugen, Luftfahrzeugen oder Schiffen eingesetzt werden.

Fahrzeuge, insbesondere Kraftfahrzeuge, mit einem manuellen Fahrmodus sind seit Langem bekannt. Es handelt sich dabei um Fahrzeuge, die von einem Fahrer des Fahrzeugs bedient werden, wobei der Fahrer die zur Fahrt nötigen Steueraktivitäten (z.B. Bremsen, Beschleunigen, Lenken) manuell vornimmt. Moderne Fahrzeuge weisen jedoch zunehmend Unterstützungsfunktionen auf, die einen teilweise oder vollständig automatischen Fahrmodus ermöglichen. Solche Unterstützungsfunktionen, die dem Fahrer manche seiner Aufgaben abnehmen oder erleichtern können, sind auch als Fahrerassistenzsysteme bekannt. Bei Kraftfahrzeuge bekannte Beispiele umfassen abstandsbasierte Geschwindigkeitsregelanlagen, Parkassistenten, Spurhalteassistenten, Bremsassistenten und dergleichen. Es wurden bereits Kraftfahrzeuge öffentlich vorgestellt, die einen vollständig automatischen Fahrmodus aufweisen, die also ohne Zutun des Fahrers fahren. Ein solcher vollständig automatischer Fahrmodus wird im Stand der Technik mitunter als automatisches Fahren, autonomes Fahren oder pilotiertes Fahren bezeichnet.

Da der Fahrer einiger oder aller seiner Fahraufgaben entledigt wird, wenn sich das Fahrzeug in einem teilweisen oder vollständig automatischen Fahrmodus befindet, kann der Fahrer dann eine seiner reduzierten Aufgabenlast entsprechende Ruheposition einnehmen. Insbesondere dann, wenn das Fahrzeug in einem vollständig automatischen Fahrmodus betrieben wird, kann der Fahrer eine bequeme Ruheposition einnehmen. Es kann vorgesehen sein, dass der Fahrmodus wechselt. Beispielsweise kann ein Fahrzeug von einem manuellen in einen zumindest teilweise automatischen Fahrmodus wechseln, wenn ein Streckenabschnitt bevorsteht, der in diesem Fahrmodus beherrschbar ist (z.B. eine hochgenau vermessene Strecke oder eine Strecke mit elektronischen Positionsbaken). Umgekehrt kann ein Fahrzeug von einem zumindest teilweise automatischen Fahrmodus in einen manuellen Fahrmodus wechseln, wenn der Fahrer wieder die vollständige Kontrolle über das Fahrzeug übernehmen soll.

DE 10 2012 213 965 A1 beschreibt ein Verfahren zum Gewährleisten einer ausreichenden Leistungsfähigkeit eines Fahrers eines Kraftfahrzeugs beim automatisierten Fahren. Dabei wird der Fahrer in einem automatischen Fahrmodus fortlaufend in zeitlichen Abständen aufgefordert, jeweils eine unterschiedliche Aufgabe im Fahrzeug auszuführen. Hierdurch kann die Leistungsfähigkeit des Fahrers fortlaufend bestimmt und kontrolliert werden. Es kann dadurch sichergestellt werden, dass der Fahrer zu jedem Zeitpunkt für einen Wechsel in den manuellen oder in einen teilweise automatischen Fahrmodus bereit ist.

EP 2 840 000 A2 lehrt ein Verfahren für den Betrieb eines Fahrerassistenzsystems, wobei durch einen Fahrer ein Schlafmodus aktiviert wird, in dem wenigstens eine Fahrzeugkomponente so gesteuert wird, dass sie eine bequeme Ruhe- oder Schlafpause des Fahrers ermöglichst. Beispielsweise kann der Fahrersitz und/oder das Lenkrad in eine für den Fahrer bequemere Position verstellt werden.

DE 10 2013 110 865 A1 offenbart ein weiteres Verfahren für ein Fahrerassistenzsystem eines Fahrzeugs. Ein Lenkrad des Fahrzeugs ist zwischen einer ersten und einer zweiten Position verstellbar. Durch ein Verstellen des Lenkrads zwischen den Positionen kann eine Autopilotfunktion des Fahrzeugs aktiviert bzw. deaktiviert werden.

DE 10 2013 000 632 A1 beschreibt eine Sitzanordnung während des automatisierten Fahrens eines Fahrzeugs. Dabei ist vorgesehen, dass eine Sitzeinstellung (z.B. Lehnenneigung) eines Sitzes in Abhängigkeit des Fahrmodus verstellbar ist. So kann beispielsweise beim vollautomatisierten Fahren die Sitzlehne stark geneigt werden, damit der Fahrer eine Ruheposition einnehmen kann. Es wird weiter offenbart, dass in diesem Fahrmodus dem Fahrer zusätzlicher Raum gegeben wird, indem ein Lenkrad in das Armaturenbrett eingefahren wird.

Ein sofortiger Wechsel in einen manuellen Fahrmodus ist bei einer Anordnung wie der in DE 10 2013 000 632 A1 beschriebenen nicht möglich. Es ist vielmehr zwingend erforderlich, dass das Fahrzeug sich mindestens für eine so lange zukünftige Zeitdauer sicher in dem vollautomatisierten Fahrmodus bewegen kann, wie es dauert, den Fahrer auf die bevorstehende Übernahme seiner Fahraufgabe aufmerksam zu machen und den Sitz sowie ggf. das Lenkrad in die für den manuellen Fahrmodus geeignete Position zurückzustellen. Dies birgt den Nachteil, dass im Zweifel der automatische Fahrmodus nicht eingestellt werden kann, wenn eine rechtzeitige sichere Rückkehr in den manuellen Fahrmodus nicht gewährleistet ist.

Ausgehend vom Stand der Technik stellt sich die Aufgabe, ein Fahrzeug bereitzustellen, das einen schnellen Wechsel von einem automatischen in einen manuellen Fahrmodus ermöglicht.

Die Aufgabe wird gelöst bei einem Fahrzeug und einem Verfahren mit den Merkmalen der unabhängigen Patentansprüche. Vorteilhafte Weiterbildungen der Erfindung sind Gegenstände der abhängigen Ansprüche.

Das erfindungsgemäße Fahrzeug weist ein Cockpit auf. Der Begriff Cockpit bezeichnet dabei den Platz des Fahrers und schließt neben dessen (des Fahrers) Sitz auch die zur Nutzung durch den Fahrer vorgesehenen Anzeige- und Bedienelemente ein. Ein anderes gebräuchliches Wort für Cockpit ist Fahrerarbeitsplatz. Das Cockpit umfasst einen Fahrersitz und mindestens ein fahrrelevantes Cockpitelement zur funktionalen Nutzung durch einen Fahrer des Fahrzeugs. Ein fahrrelevantes Cockpitelement ist ein Element des Cockpits, das der Fahrer zum Steuern des Fahrzeugs benutzt. Ein fahrrelevantes Cockpitelement kann beispielsweise ein Lenkrad, ein Spiegel, ein Gaspedal, ein Bremspedal und dergleichen sein. Hingegen ist ein Cockpitelement, dessen Zweck nicht auf das Steuern des Fahrzeugs gerichtet ist, nicht fahrrelevant. Beispielsweise ist ein Bedienelement eines Autoradios in der Regel ein nicht fahrrelevantes Cockpitelement. Das erfindungsgemäße Fahrzeug ist in einem manuellen Fahrmodus und in einem zumindest teilweise automatischen Fahrmodus betreibbar. Das Fahrzeug umfasst ein Steuergerät zur automatischen Einstellung einer Position des Fahrersitzes und / oder einer Position des mindestens einen Cockpitelements. Mit einer automatischen Einstellung ist eine Einstellung bezeichnet, welche durch das Steuergerät veranlasst und mittels mit dem Steuergerät verbundener Aktoren automatisch durchgeführt wird. Beispielsweise kann das Steuergerät Elektromotoren ansteuern, die den Fahrersitz und / oder das Cockpitelement bewegen. Das Steuergerät ist eingerichtet, eine erste Position des Fahrersitzes und eine erste Position des mindestens einen fahrrelevanten Cockpitelements einzustellen, wenn das Fahrzeug in dem manuellen Fahrmodus betrieben wird. Diese ersten Positionen können insbesondere diejenigen Positionen sein, die bei einem aus dem Stand der Technik bekannten herkömmlichen Fahrzeug üblicherweise gewählt werden, wenn das Fahrzeug in dem manuellen Fahrmodus betrieben wird, wenn also der Fahrer das Fahrzeug selbstständig steuert. Das Steuergerät ist weiter eingerichtet, eine zweite Position des Fahrersitzes und / oder eine zweite Position des mindestens einen fahrrelevanten Cockpitelements einzustellen, wenn das Fahrzeug in dem automatischen Fahrmodus betrieben wird. Wie vorstehend beschrieben wurde, kann dem Fahrer in einem zumindest teilweise automatisch betriebenen Fahrzeug eine im Vergleich zu der für den manuellen Fahrmodus erforderlichen oder idealen Sitzposition bequemere Sitzposition ermöglicht werden. Dies kann durch das Einstellen der zweiten Position des Fahrersitzes erreicht werden. Zusätzlich oder alternativ kann dem Fahrer mehr Raum gegeben werden, indem das fahrrelevante Cockpitelement in die zweite Position gestellt wird. Beispielsweise kann ein Lenkrad in Richtung des Armaturenbretts verstellt werden. Im Stand der Technik ist bekannt, welche Bedingungen die jeweiligen zweiten Positionen erfüllen müssen, um Sicherheitsanforderungen zu genügen. Beispielsweise muss sichergestellt sein, dass Rückhaltesysteme des Fahrzeugs (z.B. Sicherheitsgurt, Airbag) auch in der zweiten Position des Fahrersitzes wirksam sind.

Neben den genannten Komfortaspekten besteht ein weiterer Vorteil des Einstellens der zweiten Position des Fahrersitzes und / oder der zweiten Position des mindestens einen fahrrelevanten Cockpitelements darin, dass der Fahrer unmittelbar und intuitiv erkennen kann, ob das Fahrzeug im manuellen oder im automatischen Fahrmodus betrieben wird.

Das erfindungsgemäße Fahrzeug ist dadurch gekennzeichnet, dass das Steuergerät eingerichtet ist, die zweite Position des Fahrersitzes und / oder die zweite Position des mindestens einen fahrrelevanten Cockpitelements derart einzustellen, dass das mindestens eine fahrrelevante Cockpitelement durch den Fahrer funktional genutzt werden kann, wenn das Fahrzeug in dem automatischen Fahrmodus betrieben wird oder betrieben werden soll. Mit anderen Worten sieht die Erfindung vor, dass in dem automatischen Fahrmodus zwar die Position des Fahrersitzes und / oder die Position des Cockpitelements verstellt werden können, diese Verstellung aber dadurch begrenzt ist, dass das Cockpitelement weiterhin durch den Fahrer nutzbar bleiben muss. Die Erfindung ermöglicht es also dem Fahrer, zu jeder Zeit die Kontrolle über das Fahrzeug auszuüben oder wieder zu übernehmen. Insbesondere ermöglicht die Erfindung, von dem automatischen in den manuellen Fahrmodus zu wechseln, ohne die für einen Wechsel in die erste Position des Fahrersitzes und die erste Position des Cockpitelements benötigte Zeit abwarten zu müssen.

Die Erfindung ist auch dann von Nutzen, wenn der Fahrer die zweite Position des Fahrersitzes selbst bestimmt. Hierzu könnte eine bevorzugte Sitzposition des Fahrers für einen automatischen Fahrmodus vorab in dem Steuergerät gespeichert sein. Der Fahrer könnte die Einstellung der Sitzposition auch nach einem erfolgten Wechsel in den automatischen Fahrmodus selber vornehmen, indem er entsprechende Bedienelemente zur Einstellung der Position des Sitzes betätigt. Ausdrücklich soll daher unter der automatischen Einstellung der Position des Fahrersitzes auch eine solche von dem Fahrer veranlasste Einstellung verstanden werden. Nachdem der Fahrer die zweite Position des Sitzes bestimmt und somit festgelegt hat, wird zur Umsetzung der Erfindung die zweite Position des mindestens einen fahrrelevanten Cockpitelements derart eingestellt, dass das mindestens eine fahrrelevante Cockpitelement durch den Fahrer funktional genutzt werden kann, wenn das Fahrzeug in dem automatischen Fahrmodus betrieben wird oder betrieben werden soll.

Auch wenn die Erfindung und / oder einzelne Ausführungsformen mit Bezug zu einem einzigen fahrrelevanten Cockpitelement erläutert und dargestellt werden, so versteht es sich, dass die Erfindung keinesfalls auf ein einziges fahrrelevantes Cockpitelement eingeschränkt ist. Vielmehr ist es besonders vorteilhaft, eine jeweilige zweite Position vieler, insbesondere aller, fahrrelevanter Cockpitelemente derart einzustellen, dass die Cockpitelemente durch den Fahrer funktional genutzt werden können, wenn das Fahrzeug in dem automatischen Fahrmodus betrieben wird oder betrieben werden soll.

Ausführungsformen der Erfindung können vorsehen, dass das Einstellen der Position des Fahrersitzes eine Veränderung einer Tiefenposition und / oder eine Veränderung einer Lehnenneigung umfasst. Eine Veränderung der Tiefenposition ist eine Veränderung der Position in Längsrichtung des Fahrzeugs. Der Fahrersitz kann also in Fahrzeuglängsrichtung vor oder zurück bewegt werden. In einem automatischen Fahrmodus kann beispielsweise der Sitz nach hinten bewegt werden und die Sitzlehne stärker geneigt werden. Dies ermöglicht dem Fahrer eine bequemere Sitzposition und vergrößert den freien Raum vor dem Fahrer. Die Art und das Ausmaß der Sitzeinstellung hängen davon ab, welche Fahraufgaben der Fahrer zu erfüllen hat. Ist beispielsweise ein vollständig automatischer Fahrmodus eingestellt, so muss der Fahrer keinerlei Fahraufgaben übernehmen und der Sitz kann in eine sehr bequeme Position eingestellt werden. Erfindungsgemäß werden dieser Sitzposition nur dadurch Grenzen gesetzt, dass das fahrrelevante Cockpitelement zu jeder Zeit durch den Fahrer genutzt werden kann. Ist beispielsweise das Cockpitelement ein Lenkrad, so darf der Sitz nur so weit nach hinten verstellt werden, dass der Fahrer aus seiner Sitzposition das Lenkrad mit seinen Händen greifen und bedienen kann.

Es kann bevorzugt vorgesehen sein, dass das Einstellen der Position des mindestens einen fahrrelevanten Cockpitelements eine Veränderung einer Höhenposition und / oder einer Tiefenposition des Cockpitelements umfasst.

Eine Veränderung der Tiefenposition ist eine Veränderung der Position in Längsrichtung des Fahrzeugs. Eine Veränderung der Tiefenposition, wobei das Cockpitelement vom Fahrer wegbewegt wird, vergrößert den freien Raum vor dem Fahrer. Hierdurch kann in einem automatischen Fahrmodus ein Komfortgewinn erzielt werden. Da erfindungsgemäß die zweite Position des Cockpitelements derart eingestellt wird, dass das Cockpitelement durch den Fahrer funktional genutzt werden, ist eine Veränderung der Tiefenposition des Cockpitelements nur höchstens so weit möglich, dass der Fahrer das Cockpitelement aus seiner (durch die zweite Position des Fahrersitzes festgelegten) Sitzposition erreichen kann. Beispielsweise muss die zweite Position des Cockpitelements so gewählt sein, dass der Fahrer ein mit einer Hand zu bedienendes Cockpitelement aus seiner Sitzposition mit der Hand erreichen kann. Ebenso muss die zweite Position des Cockpitelements so gewählt sein, dass der Fahrer ein mit einem Fuß zu bedienendes Cockpitelement aus seiner Sitzposition mit dem Fuß erreichen kann. Ein Cockpitelement, das ein fahrrelevantes Anzeigeelement ist, darf nur so weit vom Fahrer entfernt sein, dass der Fahrer den Inhalt der Anzeige erkennen kann.

Eine Veränderung der Höhenposition ist eine Veränderung der Position entlang der Hochachse des Fahrzeugs. Durch eine Veränderung der Höhenposition kann ebenfalls der freie Raum vor dem Fahrer vergrößert werden, wodurch ein Komfortgewinn erzielt wird. Eine Veränderung der Höhenposition kann auch den Zweck haben, dass das Cockpitelement weiterhin genutzt werden kann, wenn die zweite Position des Fahrersitzes eingestellt ist. Wird beispielsweise in dem automatischen Fahrmodus der Sitz nach hinten verstellt und die Lehne stark geneigt, so kann der Fahrer aufgrund seiner veränderten Kopfposition Anzeige- oder Sichtelemente nicht mehr optimal einsehen. Indem die Höhenposition dieser Cockpitelemente verändert wird, kann sichergestellt werden, dass der Fahrer auch in dem automatischen Fahrmodus die Anzeige- oder Sichtelemente einsehen kann.

Bei einer Ausführungsform der Erfindung ist das mindestens eine fahrrelevante Cockpitelement ein Lenkrad. Die zweite Position des Lenkrads kann so gewählt sein, dass der Fahrer in dem automatischen Fahrmodus mehr Platz hat. Beispielsweise kann in einem vollständig automatischen Fahrmodus dem Fahrer erlaubt werden, eine Zeitung zu lesen, da in diesem Fahrmodus seine Kontrolle über das Fahrzeug nicht erforderlich ist. Tiefenverstellbare Lenkräder, also Lenkräder, die sich in die Ebene des Armaturenbretts hinein oder aus dieser Ebene heraus bewegen lassen, sind an sich im Stand der Technik bekannt. Ein solches automatisch bewegbares Lenkrad kann zur Umsetzung der Erfindung genutzt werden, indem es in dem automatischen Fahrmodus vom Fahrer weg in die Ebene des Armaturenbretts hinein bewegt wird. Wesentlich ist dabei, dass der Fahrer auch aus der Sitzposition, die er in dem automatischen Fahrmodus aufgrund der dann eingestellten zweiten Position des Fahrersitzes einnimmt, das Lenkrad (welches sich in der zweiten Position des Lenkrads befindet) mit seinen Händen erreichen und betätigen kann.

Bei einer Ausführungsform der Erfindung ist das mindestens eine fahrrelevante Cockpitelement ein Pedal, insbesondere ein Bremspedal oder ein Gaspedal. Es kann vorgesehen sein, dass die zweite Position des Pedals so gewählt ist, dass der Fahrer in dem automatischen Fahrmodus mehr Beinfreiheit hat. Wie vorstehend für das Lenkrad erläutert ist auch bei der zweiten Position des Pedals wesentlich, dass es für den Fahrer nutzbar bleibt.

Bei einer Ausführungsform der Erfindung ist das mindestens eine fahrrelevante Cockpitelement ein Head-up-Display. Ein solches Head-up-Display, welches üblicherweise in Blickrichtung des Fahrers auf die Straße angeordnet ist, dient der Anzeige fahrrelevanter Informationen (z.B. Momentangeschwindigkeit, Warnungen und dergleichen). Damit der Fahrer auch in seiner im automatischen Fahrmodus eingenommenen Sitzposition beim Blick auf die Straße das Head-up-Display nutzen kann, kann vorgesehen sein, die Höhenposition des Head-up-Displays einzustellen. Umfasst beispielsweise die zweite Position des Fahrersitzes eine gegenüber der ersten Position des Fahrersitzes nach hinten verschobene Sitzfläche und nach hinten geneigte Lehnenneigung, so befindet sich der Kopf des Fahrers im Vergleich mit der Kopfposition im manuellen Fahrmodus weiter unten und weiter hinten. Indem das Head-up-Display nach oben verschoben wird, kann in diesem Fall sichergestellt werden, dass der Fahrer die dargestellten Informationen bei Blick auf die Straße aus seiner veränderten Position erkennen kann. Alternativ oder zusätzlich kann vorgesehen sein, die Anzeige zu vergrößern, um den vergrößerten Abstand des Fahrers zum Head-up-Display zu kompensieren.

Bei einer Ausführungsform der Erfindung ist das mindestens eine fahrrelevante Cockpitelement ein Spiegel, insbesondere ein Außenspiegel oder ein Rückspiegel. Ein Einstellen der Position des Spiegels kann insbesondere ein Einstellen eines Neigungswinkels der Spiegelfläche umfassen. Beispielsweise kann vorgesehen sein, dass die Spiegelflächen der beiden Außenspiegel und des Rückspiegels eines Kraftfahrzeugs in dem automatischen Fahrmodus derart auf die dann vom Kopf des Fahrers eingenommene Position eingestellt werden, dass diese Spiegel dem Fahrer einen bestmöglichen Blick nach hinten ermöglichen.

In weiterer vorteilhafter Ausgestaltung ist vorgesehen, dass das Steuergerät eingerichtet ist, eine Straffheit eines Sicherheitsgurtes des Fahrers und / oder eine Position eines Gurthalters des Sicherheitsgurtes einzustellen, wobei das Steuergerät eingerichtet ist, die Straffheit des Sicherheitsgurtes und / oder die Position des Gurthalters derart einzustellen, dass das mindestens eine fahrrelevante Cockpitelement durch den Fahrer funktional genutzt werden kann, wenn das Fahrzeug in dem automatischen Fahrmodus betrieben wird oder betrieben werden soll. Um den Komfort des Fahrers in einem insbesondere vollständig automatischen Fahrmodus zu erhöhen, ist bekannt, die Straffheit des Sicherheitsgurtes zu reduzieren und / oder die Position des Gurthalters des Sicherheitsgurtes so einzustellen, dass der Sicherheitsgurt bequem anliegt, was nachfolgend als Anpassung des Sicherheitsgurts bezeichnet wird. Es ist dabei stets darauf zu achten, dass der Sicherheitsgurt in seiner Sicherheitsfunktion nicht beeinträchtigt ist. Mit Vorteil kann die Anpassung des Sicherheitsgurts derart erfolgen, dass in dem automatischen Fahrmodus der Sicherheitsgurt die funktionale Nutzung des Cockpitelements nicht erschwert. Beispielsweise kann die Straffheit des Sicherheitsgurtes so reduziert werden, dass eine Bewegung des Oberkörpers und / oder der Arme des Fahrers hin zu dem Cockpitelement möglich ist.

Erfindungsgemäß weist das Fahrzeug eine mit dem Steuergerät verbundene Erfassungseinrichtung, insbesondere eine Innenraumkamera, auf. Dabei ist das Steuergerät eingerichtet, durch eine Verarbeitung von von der Erfassungseinrichtung erfassten Daten, insbesondere Bildern, eine Körpergröße und / oder Sitzposition des Fahrers zu ermitteln. Weiterhin ist das Steuergerät eingerichtet, die zweite Position des Fahrersitzes und / oder die zweite Position des mindestens einen fahrrelevanten Cockpitelements in Abhängigkeit der ermittelten Körpergröße und / oder Sitzposition des Fahrers einzustellen. Mit anderen Worten wird mittels der Erfassungseinrichtung, die mit besonderem Vorteil eine auf den Fahrer gerichtete Innenraumkamera ist, eine Aufnahme des Fahrers erstellt. Diese kann mit Hilfe an sich im Stand der Technik bekannter Bildverarbeitungsmethoden verarbeitet werden, um die Körpergröße und / oder die Sitzposition des Fahrers zu ermitteln, wobei insbesondere auch eine Position des Kopfes des Fahrers ermittelt werden kann. Die Steuereinheit kann aus den bekannten Gegebenheiten des Fahrzeugs sowie aus der ermittelten Körpergröße und / oder Sitzposition des Fahrers die zweite Position des Fahrersitzes und / oder die zweite Position des Cockpitelements derart bestimmen, dass einerseits dem Fahrer ein größtmöglicher Komfort ermöglicht werden kann und andererseits sichergestellt ist, dass das mindestens eine fahrrelevante Cockpitelement durch den Fahrer funktional genutzt werden kann.

Mit weiterem Vorteil ist das Steuergerät eingerichtet, den Fahrer mittels einer Anzeigevorrichtung des Fahrzeugs zur Benutzung des mindestens einen fahrrelevanten Cockpitelements aufzufordern, wenn die zweite Position des Fahrersitzes und / oder die zweite Position des mindestens einen fahrrelevanten Cockpitelements eingestellt ist. Es kann somit überprüft werden, ob die gegenwärtigen Einstellungen (also die zweite Position des Fahrersitzes und die zweite Position des Cockpitelements) die Bedingung erfüllen, ob das Cockpitelement nutzbar ist. Eine solche Überprüfung bietet sich bei einer Inbetriebnahme des Fahrzeugs an, wenn dieses beispielsweise noch im Stillstand ist. Erfolgt dann zu einem späteren Zeitpunkt ein Wechsel in den automatischen Fahrmodus, so ist durch die zuvor durchgeführte Überprüfung sichergestellt, dass der Fahrer das Cockpitelement nutzen kann. Mit weiterem Vorteil kann vorgesehen sein, dass die Nutzung des Cockpitelements überprüft wird. In dem Fall, dass die Überprüfung fehlschlägt, dass also der Fahrer nicht in der Lage ist, das Cockpitelement zu nutzen, die zweite Position des Fahrersitzes und / oder die zweite Position des Cockpitelements verändert wird. Anschließend kann das Steuergerät den Fahrer mittels der Anzeigevorrichtung erneut zur Benutzung des Cockpitelements auffordern und die Nutzung überprüfen. Dies kann so lange wiederholt werden, bis die zweite Position des Fahrersitzes und die zweite Position des Cockpitelements ordnungsgemäß eingestellt sind.

Das erfindungsgemäße Verfahren dient zum Betreiben eines Fahrzeugs mit einem Cockpit umfassend einen Fahrersitz und mindestens ein fahrrelevantes Cockpitelement zur funktionalen Nutzung durch einen Fahrer des Fahrzeugs, wobei das Fahrzeug in einem manuellen Fahrmodus und in einem zumindest teilweise automatischen Fahrmodus betreibbar ist. In einem ersten erfindungsgemäßen Verfahrensschritt erfolgt ein Einstellen einer ersten Position des Fahrersitzes und einer ersten Position des mindestens einen fahrrelevanten Cockpitelements, wenn das Fahrzeug in dem manuellen Fahrmodus betrieben wird. In einem zweiten erfindungsgemäßen Verfahrensschritt ein Einstellen einer zweiten Position des Fahrersitzes und / oder einer zweiten Position des mindestens einen fahrrelevanten Cockpitelements, wenn das Fahrzeug in dem automatischen Fahrmodus betrieben wird oder betrieben werden soll, derart, dass das mindestens eine fahrrelevante Cockpitelement durch den Fahrer funktional genutzt werden kann. Die Verfahrensschritte können von einem Steuergerät des Fahrzeugs durchgeführt werden.

Erfindungsgemäß wird zusätzlich eine Körpergröße und / oder Sitzposition des Fahrers ermittelt. Dies kann beispielsweise mittels einen Innenraumkamera geschehen. Das Einstellen der zweiten Position des Fahrersitzes und / oder der zweiten Position des mindestens einen fahrrelevanten Cockpitelements erfolgt dann in Abhängigkeit der ermittelten Körpergröße und / oder Sitzposition des Fahrers.

In weiterer Ausgestaltung ist vorgesehen, dass eine Aufforderung zur Benutzung des mindestens einen fahrrelevanten Cockpitelements ausgegeben wird, wenn die zweite Position des Fahrersitzes und / oder die zweite Position des mindestens einen fahrrelevanten Cockpitelements eingestellt ist. Es kann wie vorstehend beschrieben weiter vorgesehen sein, dass eine erfolgreiche Nutzung des Cockpitelements geprüft wird und dass gegebenenfalls die zweite Position des Fahrersitzes und / oder die zweite Position des mindestens einen fahrrelevanten Cockpitelements so lange angepasst werden, bis der Fahrer das Cockpitelement nach Erhalt der Aufforderung erfolgreich genutzt hat.

Weitere Ausführungsformen der Erfindung werden nachfolgend anhand beispielhafter Darstellungen erläutert. Es zeigen
- Fig. 1: ein Cockpit eines Fahrzeugs gemäß einer Ausführungsform der Erfindung in einem manuellen Fahrmodus,
- Fig. 2: ein Cockpit eines Fahrzeugs gemäß einer Ausführungsform der Erfindung in einem vollständig automatischen Fahrmodus in einer ersten Fahrsituation,
- Fig. 3: ein Cockpit eines Fahrzeugs gemäß einer Ausführungsform der Erfindung in einem vollständig automatischen Fahrmodus in einer zweiten Fahrsituation.

Gleiche Bezugszeichen kennzeichnen in den Figuren gleiche Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden. Weiterhin ist die Darstellung nicht unbedingt maßstabsgetreu. Einzelne dargestellte Merkmale können zu Zwecken der besseren Veranschaulichung vergrößert oder verkleinert dargestellt sein.

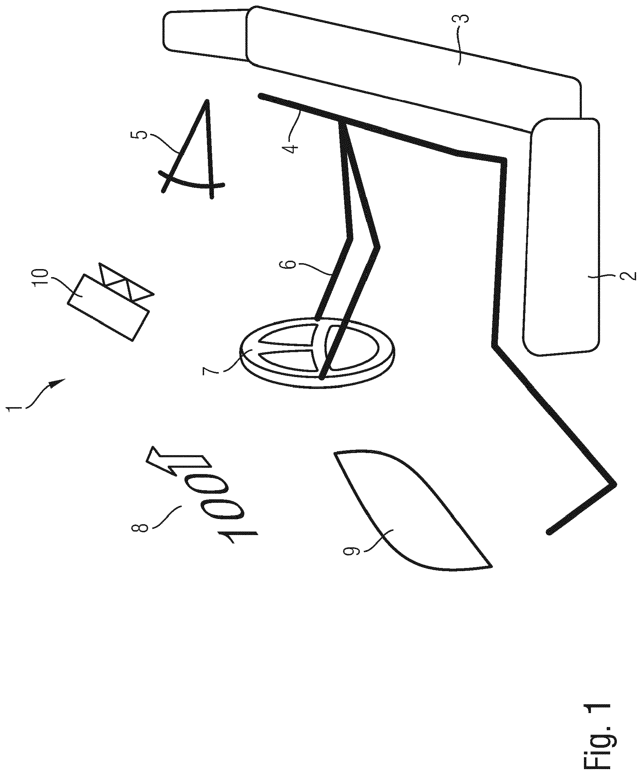

Fig. 1 zeigt ein Cockpit 1 eines Kraftfahrzeugs gemäß einer Ausführungsform der Erfindung in einem manuellen Fahrmodus. Die Darstellung ist als Prinzipdarstellung zu verstehen, wobei die einzelnen Elemente freigestellt und stilisiert gezeigt sind. Die Sitzfläche 2 und die Rücklehne 3 des Fahrersitzes befinden sich in der ersten Position. Der Oberkörper 4 des Fahrers befindet sich in einer weitgehend aufrechten Position. Der Fahrer hat seine Arme 6 zum Lenkrad 7 gerichtet und greift dieses 7 mit seinen Händen. Der Kopf 5 des Fahrers ist so positioniert, dass der Fahrer einen optimalen Blick durch die Windschutzscheibe auf die Straße (nicht dargestellt) richten kann. In diesem Blickpfad ist ein Head-up-Display 8 angeordnet, auf welchem dem Fahrer fahrrelevante Informationen angezeigt werden können, beispielsweise eine geltende zulässige Höchstgeschwindigkeit und eine Schaltempfehlung. Weiter dargestellt ist ein Außenspiegel 9 des Fahrzeugs, mit welchem der Fahrer einen hinter ihm liegenden Bereich einsehen kann. Das Cockpit kann selbstverständlich weitere, nicht dargestellte, fahrrelevante Cockpitelemente aufweisen, beispielsweise einen zweiten Außenspiegel, einen Rückspiegel, Fahrpedale und dergleichen. In der in Fig. 1 gezeigten Situation liegt ein (nicht dargestellter) Sicherheitsgurt straff am Oberkörper 4 und am Becken des Fahrers an. Eine Innenraumkamera 10 ist auf den Oberkörper 4, die Arme 6 und den Kopf 5 des Fahrers gerichtet. Sie erfasst somit die Sitzposition und die Ausmaße des Körpers des Fahrers. Die Innenraumkamera 10 ist mit einem nicht dargestellten Steuergerät zur weiteren Verarbeitung der erfassten Bilder durch eine Datenverbindung verbunden.

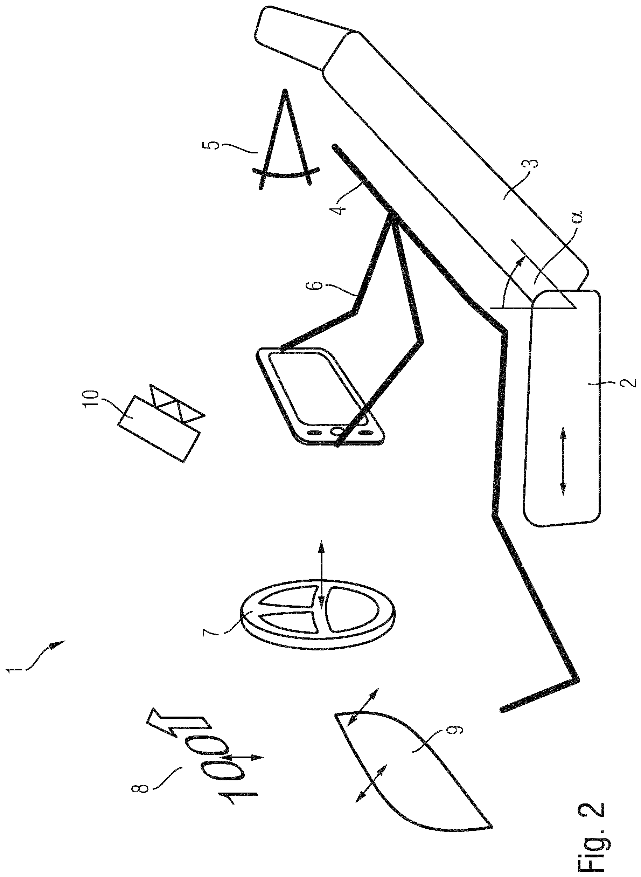

Fig. 2 zeigt ein Cockpit 1 eines Kraftfahrzeugs gemäß einer Ausführungsform der Erfindung in einem vollständig automatischen Fahrmodus. In diesem vollständig automatischen Fahrmodus muss der Fahrer keine Fahraufgaben übernehmen oder überwachen, so dass er sich vollständig anderen Aufgaben widmen kann, wenn er das möchte. Durch Doppelpfeile sind die jeweiligen Bewegungsrichtungen angedeutet, in denen der Sitz und die fahrrelevanten Cockpitelemente verstellt werden können. Im Vergleich mit der in Fig. 1 dargestellten Fahrsituation ist zu erkennen, dass die Sitzfläche 2 des Fahrersitzes nach hinten verschoben ist und die Rückenlehne 3 des Fahrersitzes stärker geneigt ist. Der zwischen der Stellung der Rückenlehne 3 in Fig. 1 und der Stellung der Rückenlehne 3 in Fig. 2 liegende Neigungswinkel a ist in Fig. 2 eingezeichnet. Der Oberkörper 4 des Fahrers liegt an der Rückenlehne 3 an, so dass sich der Fahrer in einer bequemen Sitzposition befindet. Der Fahrer hält mit seinen Armen 6 ein Unterhaltungselektronikgerät, z.B. ein Tablet. Die in Fig. 2 dargestellte zweite Position des Fahrersitzes kann von dem Steuergerät aufgrund von Vorgaben des Fahrers eingestellt worden sein. Beispielsweise kann der Fahrer mittels (nicht dargestellter) Bedienelemente eine Sitzposition gewählt haben, die ihm zusagt. Ebenso ist es möglich, dass die zweite Position des Fahrersitzes ohne Zutun des Fahrers eingestellt wurde. Die Innenraumkamera 10 erfasst die in Fig. 2 dargestellte Position des Fahrers und übermittelt die erfassten Aufnahmen an das (nicht dargestellte) Steuergerät. Dieses ermittelt insbesondere die Lage und die Ausmaße des Oberkörpers 4, der Arme 6 und des Kopfes 5 des Fahrers. Aus den so ermittelten Daten kann das Steuergerät die zweite Position der fahrrelevanten Cockpitelemente 7, 8, 9 derart bestimmen, dass diese 7, 8, 9 durch den Fahrer funktional genutzt werden können.

Das Lenkrad 7 ist in seiner zweiten Position weiter in das (nicht dargestellte) Armaturenbrett des Kraftahrzeugs bewegt, wodurch der Raum vor dem Fahrer vergrößert ist. Das Lenkrad 7 ist in seiner zweiten Position jedoch nur soweit in Richtung des Armaturenbretts verschoben, dass es durch den Fahrer weiterhin nutzbar bleibt. Der Fahrer kann das Lenkrad 7 also mit seinen Armen 6 erreichen, greifen und bedienen. Das Head-up-Display 8 ist in seiner zweiten Position nach unten verschoben, so dass der Fahrer aus seiner Kopfposition 5 das Head-up-Display 8 beim Blick aus der Windschutzscheibe auf die Straße einsehen kann. Wegen des vergrößerten Abstands von Kopf 5 zu Head-up-Display 8 kann der auf dem Head-up-Display 8 angezeigte Inhalt vergrößert dargestellt sein. Der Außenspiegel 9 ist in seiner zweiten Position so gekippt, dass der Fahrer aus seiner Kopfposition 5 mittels des Spiegels 9 den Bereich neben und hinter dem Fahrzeug optimal einsehen kann. In der in Fig. 2 gezeigten Situation liegt der (nicht dargestellte) Sicherheitsgurt locker am Oberkörper 4 und am Becken des Fahrers an. Der Sicherheitsgurt ist insbesondere so eingestellt, dass das Lenkrad 7 für den Fahrer nutzbar bleibt. Mit anderen Worten ist der Sicherheitsgurt so eingestellt, dass der Fahrer das Lenkrad 7 greifen kann.

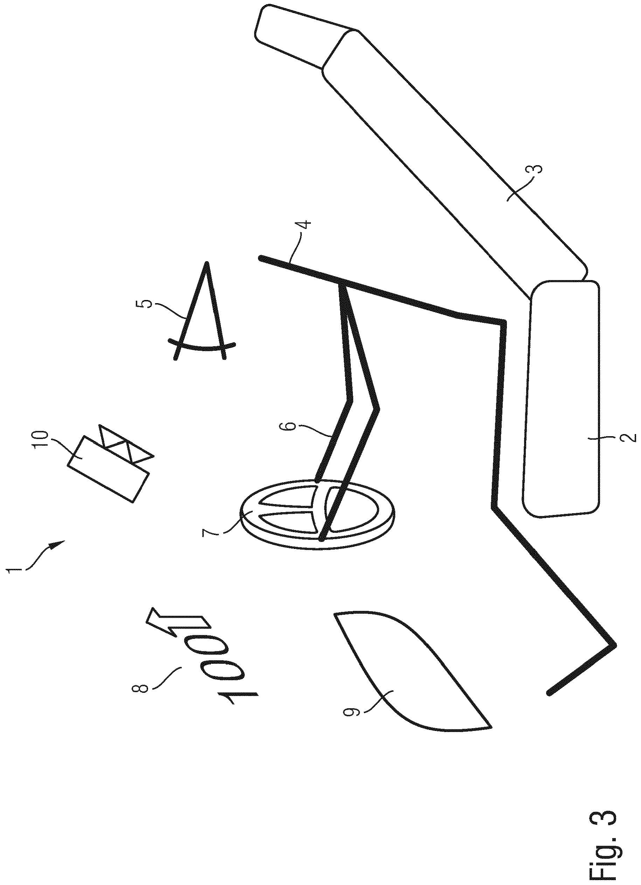

Es sei darauf hingewiesen, dass es nicht zwingend erforderlich ist, dass ein Cockpitelement aus der in dem automatischen Fahrmodus eingenommenen Position des Fahrers nutzbar sein muss. Es kann berücksichtigt werden, dass der Fahrer sich bewegen kann. Hingegen ist es zwingend erforderlich, dass ein Cockpitelement ohne eigene Bewegung (also ohne Bewegung des Cockpitelements) sowie ohne Bewegung des Fahrersitzes nutzbar ist. In dem in Fig. 2 gezeigten Beispiel kann das Lenkrad 7 also z.B. so eingestellt sein, dass der Fahrer seinen Oberkörper 4 aufrichten müsste, um es 7 zu greifen, was in Fig. 3 dargestellt ist.

Eine Ausführungsform der Erfindung kann vorsehen, dass überprüft wird, ob die Cockpitelemente in den jeweiligen zweiten Positionen funktional nutzbar sind. Hierzu kann eine Überprüfungsroutine durchgeführt werden, was bevorzugt im Stillstand des Fahrzeugs vor Fahrtantritt geschehen kann. Für diese Überprüfungsroutine werden die jeweiligen zweiten Positionen des Fahrersitzes 2, 3 und der Cockpitelemente 7, 8, 9 eingestellt. Der Fahrer wird dann mittels des Head-up-Displays 8 oder einer anderen Anzeigevorrichtung des Fahrzeugs aufgefordert, das Lenkrad 7 zu greifen und zu bewegen. Ebenso kann der Fahrer aufgefordert werden zu bestätigen, ob er das Head-up-Display 8 und den Spiegel 9 einwandfrei einsehen kann. Gelingt dies nicht, so kann das Lenkrad 7 ein Stück in Richtung des Fahrers oder die Sitzfläche 2 ein Stück in Richtung des Lenkrads 7 bewegt werden oder beides. Ebenso können das Head-up-Display 8 und der Spiegel 9 bewegt werden. Anschließend kann der Test erneut durchgeführt werden. Dies kann solange wiederholt werden, bis die Bedingung erfüllt ist, dass die Cockpitelemente 7, 8, 9 in den jeweiligen zweiten Positionen funktional nutzbar sind. Die so festgestellten jeweiligen zweiten Positionen können dann in dem Steuergerät abgespeichert werden.

Fig. 3 zeigt ein Cockpit 1 eines Fahrzeugs gemäß einer Ausführungsform der Erfindung in einem vollständig automatischen Fahrmodus in einer zweiten Fahrsituation. Der Sitz 2, 3 und die Cockpitelemente 7, 8, 9 sind weiterhin in der jeweiligen zweiten Position. Gegenüber der Darstellung in Fig. 2 ist in Fig. 3 also nur die Position des Fahrers, nicht aber die Positionen der übrigen dargestellten Elemente verändert. Im Gegensatz zu der in Fig. 2 dargestellten Fahrsituation möchte oder soll der Fahrer in der in Fig. 3 dargestellten Fahrsituation in das Fahrgeschehen eingreifen. Es ist zu erkennen, dass der Fahrer seinen Oberkörper 4 aufgerichtet hat und mit seinen Armen 6 und seinen Händen das Lenkrad 7 greift. Beispielsweise könnte der Fahrer aufgefordert worden sein, wieder die Kontrolle über das Fahrzeug zu übernehmen (sogenannte Übernahmeaufforderung) oder sich für eine bevorstehende Übernahme vorzubereiten. Ebenso kann es sein, dass der Fahrer die Kontrolle über das Lenkrad 7 übernehmen möchte, obwohl dies nicht zwingend notwendig wäre. In jedem Fall ermöglicht die Erfindung dem Fahrer in der dargestellten beispielhaften Situation eine sofortige Übernahme der Kontrolle, ohne dass zuvor die Position des Fahrersitzes 2, 3 und / oder die Position der Cockpitelemente 7, 8, 9 verändert werden muss. Die vorstehend erläuterte Einstellung des Sicherheitsgurtes erlaubt es dem Fahrer in der in Fig. 3 gezeigten Situation, seinen Oberkörper 4 wie dargestellt aufzurichten.

### Bezugszeichenliste

- 1: Cockpit
- 2: Sitzfläche
- 3: Rückenlehne des Sitzes
- 4: Oberkörper des Fahrers
- 5: Kopf des Fahrers
- 6: Arme des Fahrers
- 7: Lenkrad
- 8: Head-up-Display
- 9: Außenspiegel
- 10: Innenraumkamera
- α: Neigungswinkel der Sitzlehne

## Patentansprüche

1. Fahrzeug mit einem Cockpit (1) umfassend einen Fahrersitz (2, 3) und mindestens ein fahrrelevantes Cockpitelement (7, 8, 9) zur funktionalen Nutzung durch einen Fahrer (4, 5, 6) des Fahrzeugs, wobei das Fahrzeug in einem manuellen Fahrmodus und in einem zumindest teilweise automatischen Fahrmodus betreibbar ist, weiter umfassend ein Steuergerät zur automatischen Einstellung einer Position des Fahrersitzes (2, 3) und / oder einer Position des mindestens einen Cockpitelements (7, 8, 9), wobei das Steuergerät eingerichtet ist, eine erste Position des Fahrersitzes (2, 3) und eine erste Position des mindestens einen fahrrelevanten Cockpitelements (7, 8, 9) einzustellen, wenn das Fahrzeug in dem manuellen Fahrmodus betrieben wird, wobei das Steuergerät weiter eingerichtet ist, eine zweite Position des Fahrersitzes (2, 3) und / oder eine zweite Position des mindestens einen fahrrelevanten Cockpitelements (7, 8, 9) einzustellen, wenn das Fahrzeug in dem automatischen Fahrmodus betrieben wird, **dadurch gekennzeichnet, dass** das Steuergerät eingerichtet ist, die zweite Position des Fahrersitzes (2, 3) und / oder die zweite Position des mindestens einen fahrrelevanten Cockpitelements (7, 8, 9) derart einzustellen, dass das mindestens eine fahrrelevante Cockpitelement (7, 8, 9) durch den Fahrer funktional genutzt werden kann, wenn das Fahrzeug in dem automatischen Fahrmodus betrieben wird oder betrieben werden soll, wobei das Fahrzeug eine mit dem Steuergerät verbundene Erfassungseinrichtung, insbesondere eine Innenraumkamera (10), aufweist, wobei das Steuergerät eingerichtet ist, durch eine Verarbeitung von von der Erfassungseinrichtung (10) erfassten Daten, insbesondere Bildern, eine Körpergröße und / oder Sitzposition des Fahrers (4, 5, 6) zu ermitteln, wobei das Steuergerät eingerichtet ist, die zweite Position des Fahrersitzes (2, 3) und / oder die zweite Position des mindestens einen fahrrelevanten Cockpitelements (7, 8, 9) in Abhängigkeit der ermittelten Körpergröße und / oder Sitzposition des Fahrers (4, 5, 6) einzustellen.

2. Fahrzeug nach Anspruch 1, **dadurch gekennzeichnet, dass** das Einstellen der Position des Fahrersitzes (2, 3) eine Veränderung einer Tiefenposition und / oder eine Veränderung einer Lehnenneigung (a) umfasst.

3. Fahrzeug nach einem der vorhergehenden Ansprüche, **dadurch gekennzeichnet, dass** das Einstellen der Position des mindestens einen fahrrelevanten Cockpitelements (7, 8, 9) eine Veränderung einer Höhenposition und / oder einer Tiefenposition des Cockpitelements umfasst.

4. Fahrzeug nach einem der vorhergehenden Ansprüche, **dadurch gekennzeichnet, dass** das mindestens eine fahrrelevante Cockpitelement ein Element aus der durch
- ein Lenkrad (7),
- ein Pedal,
- einen Außenspiegel (9),
- einen Rückspiegel und
- ein Head-up-Display (8)
gebildeten Gruppe umfasst.

5. Fahrzeug nach einem der vorhergehenden Ansprüche, **dadurch gekennzeichnet, dass** das Steuergerät weiter eingerichtet ist, eine Straffheit eines Sicherheitsgurtes des Fahrers und / oder eine Position eines Gurthalters des Sicherheitsgurtes einzustellen, wobei das Steuergerät eingerichtet ist, die Straffheit des Sicherheitsgurtes und / oder die Position des Gurthalters derart einzustellen, dass das mindestens eine fahrrelevante Cockpitelement (7, 8, 9) durch den Fahrer funktional genutzt werden kann, wenn das Fahrzeug in dem automatischen Fahrmodus betrieben wird oder betrieben werden soll.

6. Fahrzeug nach einem der vorhergehenden Ansprüche, **dadurch gekennzeichnet, dass** das Steuergerät eingerichtet ist, den Fahrer (4, 5, 6) mittels einer Anzeigevorrichtung des Fahrzeugs zur Benutzung des mindestens einen fahrrelevanten Cockpitelements (7, 8, 9) aufzufordern, wenn die zweite Position des Fahrersitzes (2, 3) und / oder die zweite Position des mindestens einen fahrrelevanten Cockpitelements (7, 8, 9) eingestellt ist.

7. Verfahren zum Betreiben eines Fahrzeugs mit einem Cockpit (1) umfassend einen Fahrersitz (2, 3) und mindestens ein fahrrelevantes Cockpitelement (7, 8, 9) zur funktionalen Nutzung durch einen Fahrer (4, 5, 6) des Fahrzeugs, wobei das Fahrzeug in einem manuellen Fahrmodus und in einem zumindest teilweise automatischen Fahrmodus betreibbar ist, mit den Schritten
- Einstellen einer ersten Position des Fahrersitzes (2, 3) und einer ersten Position des mindestens einen fahrrelevanten Cockpitelements (7, 8, 9), wenn das Fahrzeug in dem manuellen Fahrmodus betrieben wird,
- Ermitteln einer Körpergröße und / oder Sitzposition des Fahrers (4, 5, 6),
- Einstellen einer zweiten Position des Fahrersitzes (2, 3) und / oder einer zweiten Position des mindestens einen fahrrelevanten Cockpitelements (7, 8, 9) in Abhängigkeit der ermittelten Körpergröße und / oder Sitzposition des Fahrers (4, 5, 6), wenn das Fahrzeug in dem automatischen Fahrmodus betrieben wird oder betrieben werden soll, derart, dass das mindestens eine fahrrelevante Cockpitelement (7, 8, 9) durch den Fahrer (4, 5, 6) funktional genutzt werden kann.

8. Verfahren nach Anspruch 7 mit dem Schritt
- Ausgeben einer Aufforderung zur Benutzung des mindestens einen fahrrelevanten Cockpitelements (7, 8, 9), wenn die zweite Position des Fahrersitzes (2, 3) und / oder die zweite Position des mindestens einen fahrrelevanten Cockpitelements (7, 8, 9) eingestellt ist.

## Claims

1. Vehicle having a cockpit (1) comprising a driver's seat (2, 3) and at least one driving-relevant cockpit element (7, 8, 9) for functional use by a driver (4, 5, 6) of the vehicle, wherein the vehicle is able to be operated in a manual driving mode and in an at least partially automatic driving mode, furthermore comprising a controller for automatically setting a position of the driver's seat (2, 3) and/or a position of the at least one cockpit element (7, 8, 9), wherein the controller is designed to set a first position of the driver's seat (2, 3) and a first position of the at least one driving-relevant cockpit element (7, 8, 9) when the vehicle is operated in the manual driving mode, wherein the controller is furthermore designed to set a second position of the driver's seat (2, 3) and/or a second position of the at least one driving-relevant cockpit element (7, 8, 9) when the vehicle is operated in the automatic driving mode, **characterized in that** the controller is designed to set the second position of the driver's seat (2, 3) and/or the second position of the at least one driving-relevant cockpit element (7, 8, 9) such that the at least one driving-relevant cockpit element (7, 8, 9) is able to be functionally used by the driver when the motor vehicle is operated or is intended to be operated in the automatic driving mode, wherein the vehicle has a recording device, in particular a passenger compartment camera (10), connected to the controller, wherein the controller is designed, by processing data, in particular images, recorded by the recording device (10), to ascertain a body size and/or sitting position of the driver (4, 5, 6), wherein the controller is designed to set the second position of the driver's seat (2, 3) and/or the second position of the at least one driving-relevant cockpit element (7, 8, 9) on the basis of the ascertained body size and/or sitting position of the driver (4, 5, 6).

2. Vehicle according to Claim 1, **characterized in that** setting the position of the driver's seat (2, 3) comprises changing a depth position and/or changing a backrest angle (a).

3. Vehicle according to either of the preceding claims, **characterized in that** setting the position of the at least one driving-relevant cockpit element (7, 8, 9) comprises changing a height position and/or a depth position of the cockpit element.

4. Vehicle according to one of the preceding claims, **characterized in that** the at least one driving-relevant cockpit element comprises an element from the group formed by
- a steering wheel (7),
- a pedal,
- an exterior mirror (9),
- a rear-view mirror and
- a head-up display (8).

5. Vehicle according to one of the preceding claims, **characterized in that** the controller is furthermore designed to set a tightness of a seatbelt of the driver and/or a position of a seatbelt holder of the seatbelt, wherein the controller is designed to set the tightness of the seatbelt and/or the position of the seatbelt holder such that the at least one driving-relevant cockpit element (7, 8, 9) is able to be functionally used by the driver when the vehicle is operated or is intended to be operated in the automatic driving mode.

6. Vehicle according to one of the preceding claims, **characterized in that** the controller is designed to ask the driver (4, 5, 6), by way of a display apparatus of the vehicle, to use the at least one driving-relevant cockpit element (7, 8, 9) when the second position of the driver's seat (2, 3) and/or the second position of the at least one driving-relevant cockpit element (7, 8, 9) is set.

7. Method for operating a vehicle having a cockpit (1) comprising a driver's seat (2, 3) and at least one driving-relevant cockpit element (7, 8, 9) for functional use by a driver (4, 5, 6) of the vehicle, wherein the vehicle is able to be operated in a manual driving mode and in an at least partially automatic driving mode, having the following steps
- setting a first position of the driver's seat (2, 3) and a first position of the at least one driving-relevant cockpit element (7, 8, 9) when the vehicle is operated in the manual driving mode,
- ascertaining a body size and/or sitting position of the driver (4, 5, 6),
- setting a second position of the driver's seat (2, 3) and/or a second position of the at least one driving-relevant cockpit element (7, 8, 9) on the basis of the ascertained body size and/or sitting position of the driver (4, 5, 6) when the vehicle is operated or is intended to be operated in the automatic driving mode, such that the at least one driving-relevant cockpit element (7, 8, 9) is able to be functionally used by the driver (4, 5, 6).

8. Method according to Claim 7, having the following step
- outputting a request to use the at least one driving-relevant cockpit element (7, 8, 9) when the second position of the driver's seat (2, 3) and/or the second position of the at least one driving-relevant cockpit element (7, 8, 9) is set.

## Revendications

1. Véhicule comportant un habitacle (1) comprenant un siège de conducteur (2, 3) et au moins un élément d'habitacle (7, 8, 9) en rapport avec la conduite pour l'utilisation fonctionnelle par un conducteur (4, 5, 6) du véhicule, le véhicule pouvant fonctionner dans un mode de conduite manuel et dans un mode de conduite au moins partiellement automatique, comprenant en outre un appareil de commande pour le réglage automatique d'une position du siège de conducteur (2, 3) et/ou d'une position de l'au moins un élément d'habitacle (7, 8, 9), l'appareil de commande étant conçu pour régler une première position du siège de conducteur (2, 3) et une première position de l'au moins un élément d'habitacle (7, 8, 9) en rapport avec la conduite lorsque le véhicule fonctionne dans le mode de conduite manuel, l'appareil de commande étant en outre conçu pour régler une deuxième position du siège de conducteur (2, 3) et/ou une deuxième position de l'au moins un élément d'habitacle (7, 8, 9) en rapport avec la conduite lorsque le véhicule fonctionne dans le mode de conduite automatique, **caractérisé en ce que** l'appareil de commande est conçu pour régler la deuxième position du siège de conducteur (2, 3) et/ou la deuxième position de l'au moins un élément d'habitacle (7, 8, 9) en rapport avec la conduite, de telle sorte que l'au moins un élément d'habitacle (7, 8, 9) en rapport avec la conduite puisse être utilisé fonctionnellement par le conducteur lorsque le véhicule fonctionne ou doit fonctionner dans le mode de conduite automatique, le véhicule présentant un dispositif de détection connecté à l'appareil de commande, en particulier une caméra d'espace intérieur (10), l'appareil de commande étant conçu, par un traitement de données, en particulier d'images, détectées par le dispositif de détection (10), pour déterminer une taille de corps et/ou une position d'assise du conducteur (4, 5, 6), l'appareil de commande étant conçu pour régler la deuxième position du siège de conducteur (2, 3) et/ou la deuxième position de l'au moins un élément d'habitacle (7, 8, 9) en rapport avec la conduite en fonction de la taille de corps et/ou de la position d'assise déterminée(s) du conducteur (4, 5, 6).

2. Véhicule selon la revendication 1, **caractérisé en ce que** le réglage de la position du siège de conducteur (2, 3) comprend une modification d'une position en profondeur et/ou une modification d'une inclinaison de dossier (a).

3. Véhicule selon l'une des revendications précédentes, **caractérisé en ce que** le réglage de la position de l'au moins un élément d'habitacle (7, 8, 9) en rapport avec la conduite comprend une modification d'une position en hauteur et/ou d'une position en profondeur de l'élément d'habitacle.

4. Véhicule selon l'une des revendications précédentes, **caractérisé en ce que** l'au moins un élément d'habitacle en rapport avec la conduite comprend un élément du groupe formé par
- un volant de direction (7),
- une pédale,
- un rétroviseur extérieur (9),
- un rétroviseur et
- un affichage tête haute (8).

5. Véhicule selon l'une des revendications précédentes, **caractérisé en ce que** l'appareil de commande est en outre conçu pour régler une tension d'une ceinture de sécurité du conducteur et/ou une position d'un support de la ceinture de sécurité, l'appareil de commande étant conçu pour régler la tension de la ceinture de sécurité et/ou la position du support de ceinture de telle sorte que l'au moins un élément d'habitacle (7, 8, 9) en rapport avec la conduite puisse être utilisé fonctionnellement par le conducteur lorsque le véhicule fonctionne ou doit fonctionner dans le mode de conduite automatique.

6. Véhicule selon l'une des revendications précédentes, **caractérisé en ce que** l'appareil de commande est conçu pour inviter le conducteur (4, 5, 6), au moyen d'un dispositif d'affichage du véhicule, à utiliser l'au moins un élément d'habitacle (7, 8, 9) en rapport avec la conduite lorsque la deuxième position du siège de conducteur (2, 3) et/ou la deuxième position de l'au moins un élément d'habitacle (7, 8, 9) en rapport avec la conduite est/sont réglée(s).

7. Procédé de fonctionnement d'un véhicule comportant un habitacle (1) comprenant un siège de conducteur (2, 3) et au moins un élément d'habitacle (7, 8, 9) en rapport avec la conduite pour l'utilisation fonctionnelle par un conducteur (4, 5, 6) du véhicule, le véhicule pouvant fonctionner dans un mode de conduite manuel et dans un mode de conduite au moins partiellement automatique, comportant les étapes de
- réglage d'une première position du siège de conducteur (2, 3) et d'une première position de l'au moins un élément d'habitacle (7, 8, 9) en rapport avec la conduite, lorsque le véhicule fonctionne dans le mode de conduite manuel,
- détermination d'une taille de corps et/ou d'une position d'assise du conducteur (4, 5, 6),
- réglage d'une deuxième position du siège de conducteur (2, 3) et/ou d'une deuxième position de l'au moins un élément d'habitacle (7, 8, 9) en rapport avec la conduite en fonction de la taille de corps et/ou de la position d'assise déterminée(s) du conducteur (4, 5, 6), lorsque le véhicule fonctionne ou doit fonctionner dans le mode de conduite automatique, de telle sorte que l'au moins un élément d'habitacle (7, 8, 9) en rapport avec la conduite puisse être utilisé fonctionnellement par le conducteur (4, 5, 6).

8. Procédé selon la revendication 7 comportant l'étape de
- délivrance d'une invitation à utiliser l'au moins un élément d'habitacle (7, 8, 9) en rapport avec la conduite lorsque la deuxième position du siège de conducteur (2, 3) et/ou la deuxième position de l'au moins un élément d'habitacle (7, 8, 9) en rapport avec la conduite est/sont réglée(s).
